(19) Europäisches Patentamt
European Patent Office
Office européen des brevets

(11) EP 4 708 735 A1

(12) EUROPEAN PATENT APPLICATION

(43) Date of publication:
11.03.2026 Bulletin 2026/11

(21) Application number: 25198808.5

(22) Date of filing: 28.08.2025

(51) International Patent Classification (IPC):
H04B 17/23 (2015.01)        H04B 17/20 (2015.01)

(52) Cooperative Patent Classification (CPC):
H04B 17/25; H04B 17/23; H04B 17/252;
H04B 17/253

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 04.09.2024 US 202418824345

(71) Applicant: Viavi Solutions Inc.
Chandler, AZ 85286 (US)

(72) Inventors:
• SATTARZADEH HASHEMI, Ata
  Guildford, GU1 3NA (GB)

• PAYAMI, Sohail
  Harlow, CM20 2UB (GB)
• LEUNG, Chi-ming
  Hardwick, CB23 7XL (GB)
• JONES, Adrian
  Letchworth, SG6 4RZ (GB)
• WANG, Stephen
  London, SW6 6NG (GB)
• BABAR, Zunaira
  Hitchin, SG4 9FJ (GB)

(74) Representative: Murgitroyd & Company
165-169 Scotland Street
Glasgow G5 8PL (GB)

(54) **PROVIDING SPATIAL FREQUENCY DOMAIN BEAM PATTERN ANALYSIS INFORMATION ASSOCIATED WITH A BASE STATION VIA A GRAPHICAL USER INTERFACE**

(57) A base station testing system provides, for display, a graphical user interface (GUI) associated with facilitating testing of a base station by the base station testing system. The GUI includes one or more selectable indicators respectively associated with one or more modules of the GUI. The base station testing system obtains, based on providing the GUI, information indicating selection of a selectable indicator that is associated with analysis of beam patterns associated with the base station and thereby identifies a beam pattern analysis module that is associated with the selectable indicator. The base station testing system provides, for display, in a window of the GUI, information associated with the beam pattern analysis module, wherein the information associated with the beam pattern analysis module includes spatial frequency domain beam pattern analysis information associated with the base station.

FIG. 1A

**Description**

FIELD

This disclosure relates to a base station testing system and method.

BACKGROUND

A base station may utilize a multi-user (MU) multiple-input multiple-output (MIMO) antenna system to support providing multiple data streams at the same time and frequency to multiple devices (e.g., user equipments).

SUMMARY

According to an aspect, there is provided a base station testing system, comprising:

a plurality of user equipments, UEs; and
one or more processors configured to:

provide, for display, a graphical user interface, GUI, associated with facilitating testing of a base station by the base station testing system,
wherein the GUI includes one or more selectable indicators respectively associated with one or more modules of the GUI;
obtain, based on providing the GUI, information indicating selection of a selectable indicator, of the one or more selectable indicators, that is associated with analysis of beam patterns associated with the base station;
identify, based on the information indicating selection of the selectable indicator, a beam pattern analysis module, of the one or more modules, that is associated with the selectable indicator; and
provide, for display, in a window of the GUI, information associated with the beam pattern analysis module, wherein the information associated with the beam pattern analysis module includes spatial frequency domain beam pattern analysis information associated with the base station.

In some embodiments, the one or more processors are further configured to:

obtain, based on providing the GUI, information indicating selection of another selectable indicator, of the one or more selectable indicators, that is associated with configuration settings;
identify, based on the information indicating selection of the other selectable indicator, a configuration settings module, of the one or more modules, that is associated with the other selectable indicator; and
provide, for display, in another window of the GUI, information associated with the configuration settings module, wherein the information associated with the configuration settings module includes first settings information associated with the base station and second settings information associated with the plurality of UEs.

In some embodiments, the one or more processors are further configured to:

obtain, based on providing the GUI, information indicating selection of another selectable indicator, of the one or more selectable indicators, that is associated with initial locations of the plurality of UEs;
identify, based on the information indicating selection of the other selectable indicator, a UE initial location module, of the one or more modules, that is associated with the other selectable indicator; and
provide, for display, in another window of the GUI, information associated with the UE initial location module, wherein the information associated with the UE initial location module includes the spatial frequency domain beam pattern analysis information and initial UE location information associated with the plurality of UEs.

In some embodiments, the one or more processors are further configured to:

obtain, based on providing the GUI, information indicating selection of another selectable indicator, of the one or more selectable indicators, that is associated with manual relocation of the plurality of UEs;
identify, based on the information indicating selection of the other selectable indicator, a manual UE relocation module, of the one or more modules, that is associated with the other selectable indicator; and
provide, for display, in another window of the GUI, information associated with the manual UE relocation module, wherein the information associated with the manual UE relocation module includes manual UE relocation information associated with the plurality of UEs and performance information associated with the base station.

In some embodiments, the one or more processors are further configured to:

obtain, based on providing the GUI, information indicating selection of another selectable indicator, of the one or more selectable indicators, that is associated with automatic relocation of the plurality of UEs;

identify, based on the information indicating selection of the other selectable indicator, an automatic UE relocation module, of the one or more modules, that is associated with the other selectable indicator; and

provide, for display, in another window of the GUI, information associated with the automatic UE relocation module, wherein the information associated with the automatic UE relocation module includes automatic UE relocation information associated with the plurality of UEs and performance information associated with the base station.

In some embodiments, the one or more processors are further configured to:

obtain, based on providing the GUI, information indicating selection of another selectable indicator, of the one or more selectable indicators, that is associated with configuration of respective trajectories of the plurality of UEs;

identify, based on the information indicating selection of the other selectable indicator, a UE trajectory configuration module, of the one or more modules, that is associated with the other selectable indicator; and

provide, for display, in another window of the GUI, information associated with the UE trajectory configuration module, wherein the information associated with the UE trajectory configuration module includes UE trajectory plotting information associated with the plurality of UEs.

In some embodiments, the one or more processors are further configured to:

obtain, based on providing the GUI, information indicating selection of another selectable indicator, of the one or more selectable indicators, that is associated with evaluation of respective trajectories of the plurality of UEs;

identify, based on the information indicating selection of the other selectable indicator, a UE trajectory evaluation module, of the one or more modules, that is associated with the other selectable indicator; and

provide, for display, in another window of the GUI, information associated with the UE trajectory evaluation module, wherein the information associated with the UE trajectory evaluation module includes UE trajectory plotting information associated with the plurality of UEs and performance information associated with the base station.

In some embodiments, the base station testing system further comprises a display screen, wherein:

the one or more processors, to provide the GUI, are configured to output the GUI via the display screen; and

the one or more processors, to provide, in the window of the GUI, the information associated with the beam pattern analysis module, are configured to output the information associated with the beam pattern analysis module in the window of the GUI via the display screen.

In some embodiments, the one or more processors, to provide the GUI, are configured to transmit the GUI to a client device to cause the client device to output the GUI via a display screen of the client device; and

the one or more processors, to provide, in the window of the GUI, the information associated with the beam pattern analysis module, are configured to transmit the information associated with the beam pattern analysis module to the client device to cause the client device to output the information associated with the beam pattern analysis module, in the window of the GUI, via the display screen of the client device.

According to another aspect, there is provided a base station testing system, comprising:

one or more processors configured to:

obtain, based on providing a graphical user interface, GUI, associated with facilitating testing of a base station by the base station testing system, information indicating selection of a selectable indicator, of one or more selectable indicators of the GUI, that is associated with analysis of beam patterns associated with the base station; and

provide, for display, in a window of the GUI, information associated with a beam pattern analysis module, of one or more modules of the GUI, that is associated with the selectable indicator,

wherein the information associated with the beam pattern analysis module includes spatial frequency domain beam pattern analysis information associated with the base station.

In some embodiments, the one or more processors are further configured to:

obtain information indicating selection of another selectable indicator, of the one or more selectable indicators, that is associated with configuration settings; and

provide, for display, in another window of the GUI, a configuration settings module, of the one or more modules, that is associated with the other selectable indicator,

wherein the information associated with the configuration settings module includes first settings information associated with the base station and second settings information associated with a plurality of user equipments, UEs, of the base station testing system.

In some embodiments, the one or more processors are further configured to:

obtain information indicating selection of another selectable indicator, of the one or more selectable indicators, that is associated with initial locations of a plurality of user equipments, UEs, of the base station testing system; and

provide, for display, in another window of the GUI, information associated with a UE initial location module, of the one or more modules, that is associated with the other selectable indicator,

wherein the information associated with the UE initial location module includes the spatial frequency domain beam pattern analysis information and initial UE location information associated with the plurality of UEs.

In some embodiments, the one or more processors are further configured to:

obtain information indicating selection of another selectable indicator, of the one or more selectable indicators, that is associated with manual relocation of a plurality of user equipments, UEs, of the base station testing system; and

provide, for display, in another window of the GUI, information associated with a manual UE relocation module, of the one or more modules, that is associated with the other selectable indicator,

wherein the information associated with the manual UE relocation module includes manual UE relocation information associated with the plurality of UEs and performance information associated with the base station.

In some embodiments, the one or more processors are further configured to:

obtain, based on providing the GUI, information indicating selection of another selectable indicator, of the one or more selectable indicators, that is associated with automatic relocation of a plurality of user equipments, UEs, of the base station testing system; and

provide, for display, in another window of the GUI, information associated with an automatic UE relocation module, of the one or more modules, that is associated with the other selectable indicator,

wherein the information associated with the automatic UE relocation module includes automatic UE relocation information associated with the plurality of UEs and performance information associated with the base station.

In some embodiments, the one or more processors are further configured to:

obtain information indicating selection of another selectable indicator, of the one or more selectable indicators, that is associated with configuration of respective trajectories of a plurality of user equipments, UEs, of the base station testing system; and

provide, for display, in another window of the GUI, information associated with a UE trajectory configuration module, of the one or more modules, that is associated with the other selectable indicator,

wherein the information associated with the UE trajectory configuration module includes UE trajectory plotting information associated with the plurality of UEs.

In some embodiments, the one or more processors are further configured to:

obtain information indicating selection of another selectable indicator, of the one or more selectable indicators, that is associated with evaluation of respective trajectories of a plurality of user equipments, UEs, of the base station testing system; and

provide, for display, in another window of the GUI, information associated with a UE trajectory evaluation module, of the one or more modules, that is associated with the other selectable indicator,

wherein the information associated with the UE trajectory evaluation module includes UE trajectory plotting information associated with the plurality of UEs and performance information associated with the base station.

According to a further aspect, there is provided a method, comprising:

providing, by a base station testing system, for display, a graphical user interface, GUI, associated with facilitating testing of a base station by the base station testing system;

obtaining, by the base station testing system and based on providing the GUI, information indicating selection of a selectable indicator, of one or more selectable indicators of the GUI, that is associated with analysis of beam patterns associated with the base station; and

providing, by the base station testing system, for display, in a window of the GUI, information associated with a beam pattern analysis module, of the one or more modules, that is associated with the selectable indicator,

wherein the information associated with the beam pattern analysis module includes spatial frequency domain beam pattern analysis information associated with the base station.

In some embodiments, the method further comprises:

obtaining information indicating selection of another selectable indicator, of the one or more selectable indicators, that is associated with initial locations of a plurality of user equipments, UEs, of the base station testing system; and

providing, for display, in another window of the GUI, information associated with a UE initial location module, of the one or more modules, that is associated with the other selectable indicator,

wherein the information associated with the UE initial location module includes the spatial frequency domain beam pattern analysis information and initial UE location information associated with the plurality of UEs,

In some embodiments, the method further comprises:

obtaining, based on providing the GUI, information indicating selection of another selectable indicator, of the one or more selectable indicators, that is associated with relocation of a plurality of user equipments, UEs, of the base station testing system; and

providing, for display, in another window of the GUI, information associated with a UE relocation module, of the one or more modules, that is associated with the other selectable indicator,

wherein the information associated with the UE relocation module includes UE relocation information associated with the plurality of UEs and performance information associated with the base station.

In some embodiments, the method further comprises:

obtaining information indicating selection of another selectable indicator, of the one or more selectable indicators, that is associated with respective trajectories a plurality of user equipments, UEs, of the base station testing system; and

providing, for display, in another window of the GUI, information associated with a UE trajectory module, of the one or more modules, that is associated with the other selectable indicator,

wherein the information associated with the UE trajectory module includes UE trajectory plotting information associated with the plurality of UEs.

BRIEF DESCRIPTION OF THE DRAWINGS

Figs. 1A-1D are diagrams of an example implementation associated with providing spatial frequency domain beam pattern analysis information associated with a base station via a GUI.

Figs. 2A-2H show example diagrams of a GUI that is provided for display.

Fig. 3 is a diagram of an example environment in which systems and/or methods described herein may be implemented.

Fig. 4 is a diagram of example components of a device associated with providing spatial frequency domain beam pattern analysis information associated with a base station via a GUI.

Fig. 5 is a flowchart of an example process associated with providing spatial frequency domain beam pattern analysis information associated with a base station via a GUI.

DETAILED DESCRIPTION

The following detailed description of example implementations refers to the accompanying drawings. The same reference numbers in different drawings may identify the same or similar elements.

A performance of a base station, such as an MU MIMO base station, can be impacted by various factors, such as configurations of beamformers, equalizers, channel conditions, and other settings, parameters, and characteristics of the base station. A base station testing system can test, analyze, and/or troubleshoot the base station, but evaluating the base station can be challenging as it is not always possible to control and isolate factors of the base station that can affect the performance of the base station. As a specific case, because radio propagation channels associated with the base station can impact a performance of the base station (e.g., with respect to one or more performance metrics associated with the base station), the base station testing system is required to create specific channel conditions in order to evaluate the base station (e.g., using a plurality of UEs of the base station testing system and/or a MIMO channel emulator and/or simulator). For example, to test whether the base station can achieve a maximum throughput (e.g., that the base station is designed to provide), an operator (e.g., a test engineer) of the base station testing system must ensure a practical availability of propagation channels that support corresponding data rates. However, designing such propagation channels is a non-trivial task that is time consuming and requires extensive use of computing resources (e.g., processing resources, memory resources, communication resources, and/or power resources, among other examples).

Some implementations described herein include a base station testing system to evaluate (e.g., test, analyze, and/or troubleshoot) a base station. The base station testing system includes one or more processors that are configured to control other components of the base station testing system (e.g., a display device, a plurality of UEs, a UE adjustment component, and/or a MIMO channel emulator and/or simulator, among other examples). In some implementations, the one or more processors provide, for display, a GUI associated with facilitating testing of a base station by the base station testing system. The GUI includes one or more selectable indicators respectively associated with one or more modules of the GUI. The one or more processors thereby obtain, based on providing the GUI, information indicating selection of a selectable indicator, of the one or more selectable indicators, that is associated with analysis of beam patterns associated with the base station.

Accordingly, the one or more processors of the base station testing system identify, based on the information indicating selection of the selectable indicator, a beam pattern analysis module, of the one or more modules, that is associated with the selectable indicator. The one or more processors then provide, for display, in a window of the GUI, information associated with the beam pattern analysis module. The information associated with the beam pattern analysis module includes spatial frequency domain beam pattern analysis information associated with the base station. The one or more processors may determine spatial frequency domain beam pattern analysis information using a formula for defining a spatial frequency response, such as the formula described below.

**In** this way, the one or more processors of the base station testing system provide a GUI that displays information that can facilitate evaluation of the base station. For example, by the base station testing system providing, for display (e.g., in the window of the GUI), the spatial frequency domain beam pattern analysis information associated with the base station, an operator (e.g., a test engineer) of the base station testing system does not need specific knowledge of the base station (e.g., such as information concerning beams associated with the base station, precoder information associated with the base station, and/or equalizer information associated with the base station) to identify where the plurality of UEs of the base station testing system are to be located to ensure an optimal evaluation of the base station. Thus, in some implementations, use of computing resources (e.g., processing resources, memory resources, communication resources, and/or power resources, among other examples) that would otherwise be used to determine theoretical preferred conditions to create the propagation channels of the base station testing system that meet testing requirements is reduced, and an amount of time to create the propagation channels is reduced, and.

Further, in some implementations, the base station testing system provides, for display, in another window of the GUI, information associated with another module of the GUI. The other module may be, for example, a configuration settings module, a UE initial location module, a UE relocation module, a UE interaction module, or a UE trajectory module (e.g., as further described herein). Accordingly, the operator of the base station testing system is able to view, within the GUI (e.g., within a single GUI), information related to configuration settings of the base station testing system and the base station, related to respective locations of the plurality of UEs of the base station testing system, and related to respective trajectories of the plurality of UEs, which would not otherwise be possible. This further increases a likelihood that the base station testing system and the base station are configured in an optimal way to facilitate a time and computing resource efficient evaluation of the base station.

Regarding an antenna factor and spatial frequency, a downlink scenario may involve K UEs, where each UE has M antennas, and a base station (e.g., an MU MIMO base station, such as a gNodeB) has N antennas. A base station antenna array may be dual polarized and placed on an $x$-$z$ plane. A transmission on one polarization may be repeated for the other polarization. In each polarization, an array may be a rectangular array with $N_x$ antennas with spacing $d_x$ and $N_z$ antennas with $d_z$ on the horizontal and vertical domains. An array response for a received signal $y_{n_x,n_z}(\phi, \theta, t) = y_{0,0}(\phi, \theta, t) a_{n_x,n_z}(\phi, \theta)$ at position $(n_x, n_z)$ in a two-dimensional (2D) array may be represented by:

$$a_{n_x,n_z}(\phi, \theta) = e^{j2\pi/\lambda(n_x d_x \sin(\theta)\sin(\phi) + n_z d_z \cos(\theta))},$$

where $n_x \in \{0, N_x - 1\}$, $n_z \in \{0, N_z - 1\}$, $t$ represents a time ($t$ can be dropped for the sake of simplicity of notation), $\lambda$ is a

wavelength, and $\theta$ and $\phi$ is an elevation angle (angle from a z-axis) and an azimuth angle (angle from an x-axis in the yz-plane), respectively. A relationship between phase values on a phase shifter matrix and UE locations may also be in accordance with the array response.

Signals may be represented by an array response matrix $\mathbf{A}(\phi, \theta)$, where its elements are generated using $a_{n_x,n_z}(\phi, \theta)$. Instead of using the elevation and azimuth angles, UE locations may be represented using spatial frequency and in a discrete Fourier transform (DFT) domain. However, other transforms that capture a linear progressive phase effect over the array may be used. Using spatial frequency in antenna array processing may introduce linearity in the manner in which the array's response to signals from different directions is represented and analyzed. Such linearity may arise from a relationship between an array geometry, signal arrival angles, and Fourier transform properties.

Spatial frequencies may be defined as $\omega_x = 2\pi f_x/N_x$ and $\omega_z = 2nf_z/N_z$, where normalized spatial frequencies $f_x$ and $f_y$ are continuous and periodic with periodicities $N_x$ and $N_z$, respectively. For the x-axis, $f_x \in \left[ -\frac{N_x}{2}, \frac{N_x}{2} \right]$ may be assumed, and the notation for the y-axis may be similar. A spatial frequency response of the array is defined by:

$$B(f_x, f_z) = \sum_{n_x=0}^{N_x-1} \sum_{n_z=0}^{N_z-1} a_{n_x,n_z}(\phi, \theta) e^{-j2\pi(n_x f_x/N_x + n_z f_z/N_z)},$$

which may be used for any array excitation and beam parameters $a_{n_x,n_z}$.

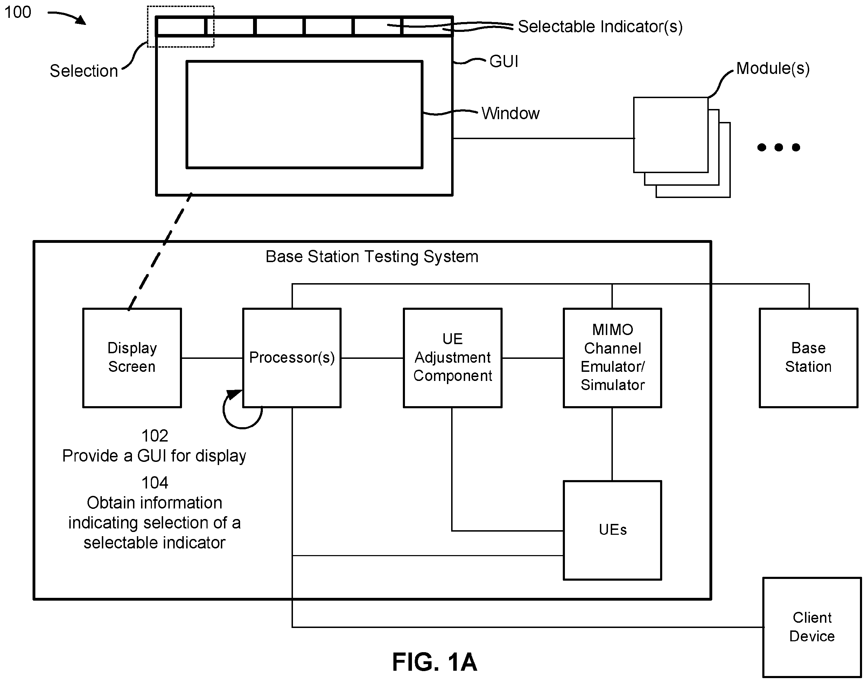

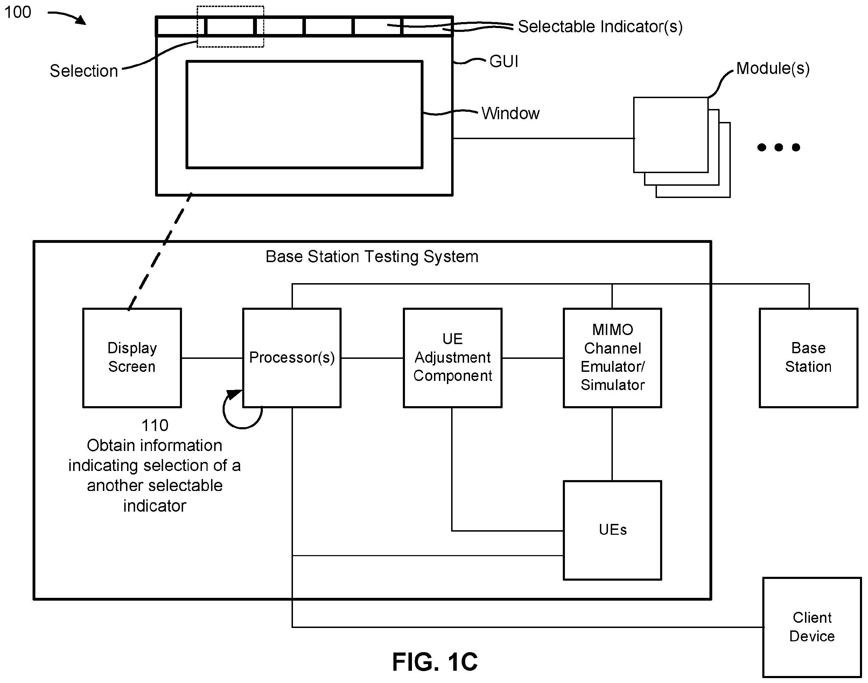

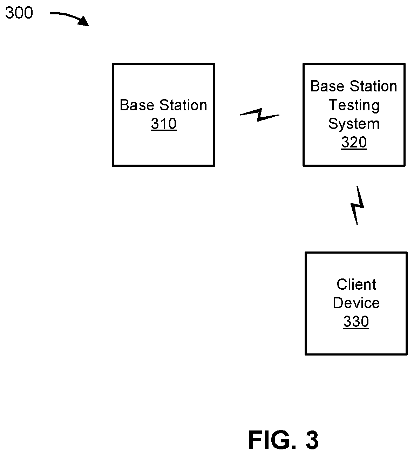

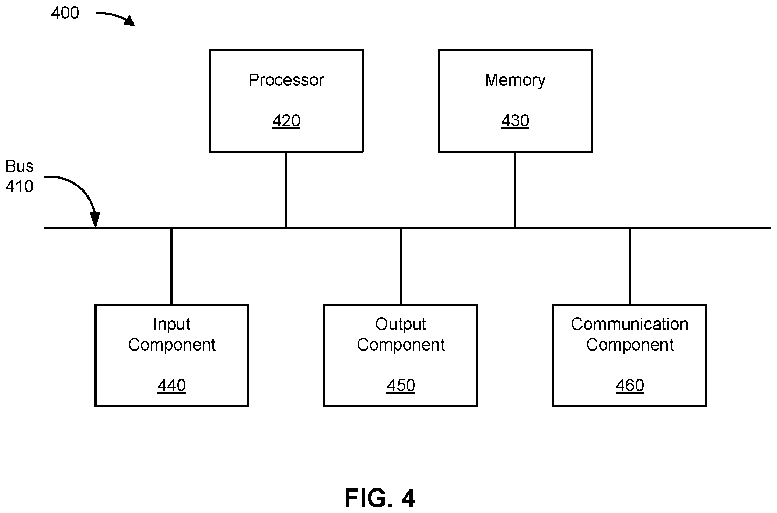

Figs. 1A-1D are diagrams of an example implementation 100 associated with providing spatial frequency domain beam pattern analysis information associated with a base station via a GUI. As shown in Figs. 1A-1D, example implementation 100 includes a base station testing system and a base station. Additionally, in some implementations, example implementation 100 also includes a client device. These devices are described in more detail below in connection with Fig. 3 and Fig. 4.

As shown in Figs. 1A-1D, the base station testing system may include a display screen, one or more processors, a UE adjustment component, a MIMO channel emulator and/or simulator (referred to hereinafter as the MIMO channel emulator/simulator), and/or a plurality of UEs. The display screen may be configured to display a GUI (e.g., to an operator of the base station testing system), as further described herein. The one or more processors may be configured to control one or more components of the base station testing system, such as the display screen, the UE adjustment component, the MIMO channel emulator/simulator, and/or the plurality of UEs (e.g., as further described herein). The UE adjustment component may be configured to move the plurality of UEs (e.g., from respective first positions to respective second positions, as further described herein). The MIMO channel emulator/simulator may be configured to emulate complex and dynamic real-world wireless channels for communications (e.g., of signals) between the plurality of UEs and the base station. The plurality of UEs may include wireless communication devices and/or emulated UEs (e.g., as emulated by the MIMO channel emulator/simulator, or by a UE emulator that is included in, or, alternatively, is separate from, the MIMO channel emulator/simulator) that are capable of communicating with the base station (e.g., as further described herein).

As further in Figs. 1A-1D, the base station testing system may connect to the base station. For example, the one or more processors and/or the MIMO channel emulator/simulator may connect to the base station. The base station may be, for example, an MU MIMO base station, such as a next-generation node B (gNodeB) base station.

In some implementations, the base station testing system may connect to the client device. For example, the base station testing system and the client device may be connected such that the one or more processors may transmit information to cause a display screen of the client device to display the information, as further described herein.

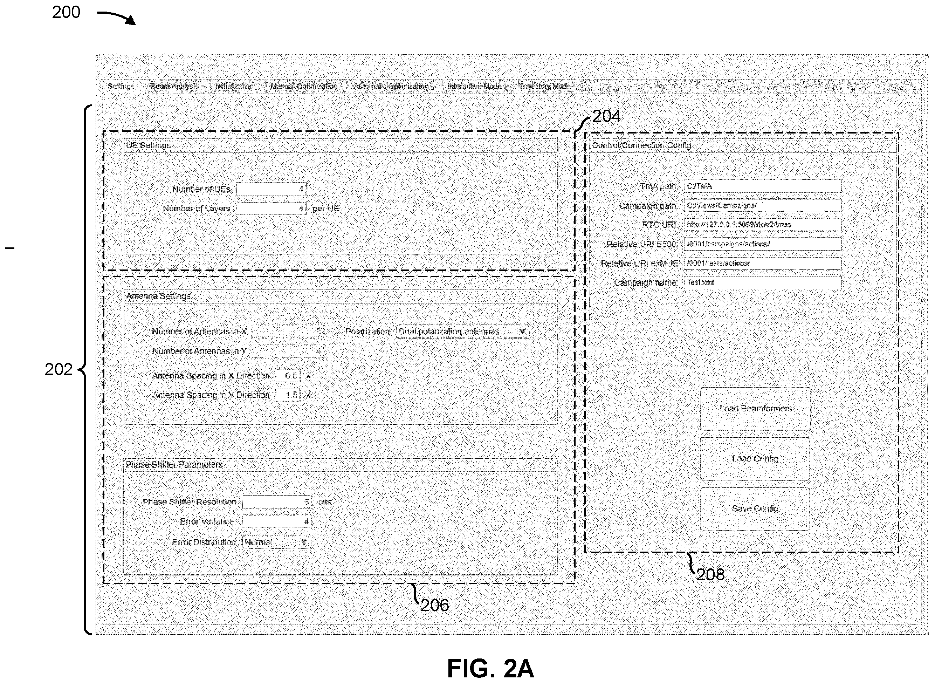

As shown in Fig. 1A, and by reference number 102, the one or more processors of the base station testing system may provide a GUI for display. The GUI may be associated with facilitating testing of the base station (e.g., by the base station testing system). That is, the GUI may be an interface for displaying information (e.g., to an operator of the base station testing system) that indicates a status of one or more settings, one or more parameters, one or more characteristics, and/or other information, of the base station testing system and/or the base station. The GUI may include, for example, one or more selectable indicators (e.g., tab headers, or other types of selectable indicators) that are associated with one or more respective modules of the GUI. A module, may include, for example, information associated with one or more particular aspects of the base station testing system and/or the base station. Selection of a selectable indicator (e.g., by using an input component of the base station testing system, of the client device, or of another device) may cause the base station testing system to provide, for display (e.g., via the GUI) information associated with a module that is associated with the selectable indicator, as further described herein. Additional details related to the GUI are described herein in relation to Figs. 2A-2H.

In some implementations, to provide the GUI for display, the one or more processors may output the GUI via the display screen of the base station testing system. For example, the one or more processors may transmit the GUI to the display screen via a connection between the one or more processors and the display screen, and therefore the display screen may receive the GUI from the one or more processors via the connection. The display screen may then display the GUI (e.g., as output). In this way, the one or more processors may be configured to output the GUI via the display screen of the base station testing system.

Additionally, or alternatively, to provide the GUI for display, the one or more processors may output the GUI via a display screen of the client device. For example, the one or more processors may transmit the GUI to the client device via a connection between the one or more processors and the client device, and therefore the client device may receive the GUI from the one or more processors via the connection. This may cause the client device to display the GUI via the display screen of the client device (e.g., as output). In this way, the one or more processors may be configured to output the GUI via the display screen of the client device.

As shown by reference number 104, the one or more processors may obtain information indicating selection of a selectable indicator of the one or more selectable indicators. That is, the one or more processors may obtain information that indicates that information associated with a module, of the one or more modules, that is associated with the selectable indicator (e.g., that corresponds to the selectable indicator) is to be provided, for display, via the GUI. In some implementations, a user (e.g., an operator of the base station testing system) may interact with the GUI (e.g., via an input component of the base station testing system or an input component of the client device) to allow the one or more processors to obtain the information indicating selection of the selectable indicator. For example, the user may select the selectable indicator (e.g., by "tapping," "clicking," or otherwise engaging the selectable indicator), which causes the base station testing system to obtain the information indicating selection of the selectable indicator.

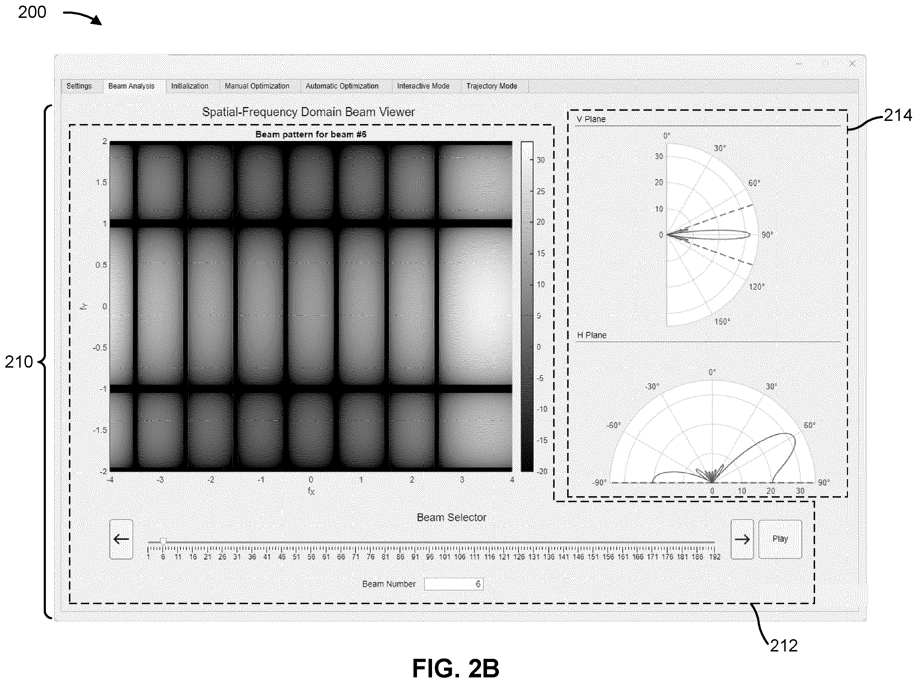

In some implementations, the selectable indicator is associated with analysis of beam patterns associated with the base station (e.g., directional patterns of signals associated with the base station). In some implementations, the selectable indicator may have a label (shown as "Beam Analysis" in Fig. 2B) that indicates that the selectable indicator is associated with analysis of beam patterns associated with the base station. Accordingly, the selectable indicator may be associated with a beam pattern analysis module, as further described herein.

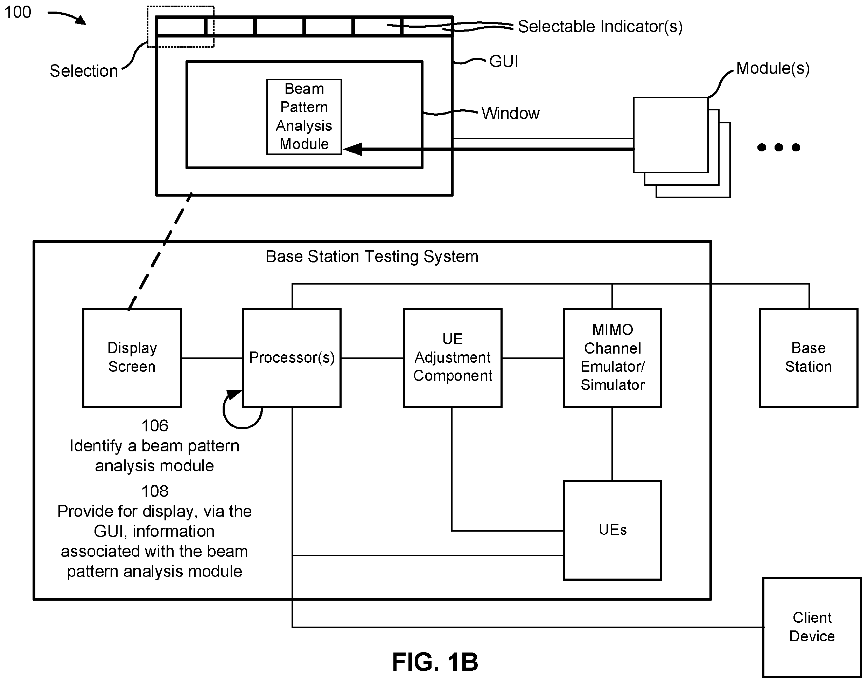

As shown in Fig. 1B, and by reference number 106, the one or more processors may identify the beam pattern analysis module (e.g., based on the information indicating selection of the selectable indicator). For example, the one or more processors may process (e.g., parse and/or read) the information indicating selection of the selectable indicator to determine that the selectable indicator has been selected and may thereby identify the beam pattern analysis module (e.g., because the beam pattern analysis module is associated with the selectable indicator, which may be indicated by a data structure that identifies relationships between selectable indicators and modules).

As shown by reference number 108, the one or more processors may provide for display, via the GUI, information associated with the beam pattern analysis module. For example, the one or more processors may provide the information associated with the beam pattern analysis module for display in a window of the GUI. Additional details associated with providing the information associated with the beam pattern analysis module for display via the GUI is described herein in relation to Fig. 2B.

In some implementations, to provide the information associated with the beam pattern analysis module for display (e.g., in the window of the GUI), the one or more processors may output the information associated with the beam pattern analysis module via the display screen of the base station testing system. For example, the one or more processors may transmit the information associated with the beam pattern analysis module to the display screen via the connection between the one or more processors and the display screen, and therefore the display screen may receive the information associated with the beam pattern analysis module from the one or more processors via the connection. The display screen may then display the information associated with the beam pattern analysis module (e.g., as output, in the window of the GUI). In this way, the one or more processors may be configured to output the information associated with the beam pattern analysis module in the window of the GUI via the display screen of the base station testing system.

Additionally, or alternatively, to provide the information associated with the beam pattern analysis module for display (e.g., in the window of the GUI), the one or more processors may output the information associated with the beam pattern analysis module via the display screen of the client device. For example, the one or more processors may transmit the information associated with the beam pattern analysis module to the client device via the connection between the one or more processors and the client device, and therefore the client may receive the information associated with the beam pattern analysis module from the one or more processors via the connection. This may cause the client device to display the information associated with the beam pattern analysis module via the display screen of the client device (e.g., as output, in the window of the GUI). In this way, the one or more processors may be configured to output the information associated with the beam pattern analysis module in the window of the GUI via the display screen of the client device.

The information associated with the beam pattern analysis module may include, for example, spatial frequency domain beam pattern analysis information associated with the base station. The spatial frequency domain beam pattern analysis information may indicate how the base station (e.g., an antenna array of the base station) distributes energy across different spatial frequencies.

In some implementations, the one or more processors may determine the spatial frequency domain beam pattern analysis information based on angle domain beam pattern analysis information associated with the base station (e.g., that indicates how the base station distributes energy, represented as a function of an angle relative to the antenna array of the base station). The one or more processors may determine the angle domain beam pattern analysis information based on information obtained from the base station (e.g., base station performance information obtained from the base station, or other information obtained from the base station). Accordingly, the one or more processors may process the angle domain beam pattern analysis information (e.g., using one or more processing techniques, such as a technique that utilizes a discrete Fourier transform (DFT)), to determine the spatial frequency domain beam pattern analysis information. For example, the one or more processors may determine the spatial frequency domain beam pattern analysis information, based on the angle domain beam pattern analysis information, using a formula for defining a spatial frequency response, such as that described above.

As shown by reference number 110, the one or more processors may obtain information indicating selection of another selectable indicator of the one or more selectable indicators. That is, the one or more processors may obtain information that indicates that information associated with another module, of the one or more modules, that is associated with the selectable indicator (e.g., that corresponds to the selectable indicator) is to be provided, for display, via the GUI. In some implementations, a user (e.g., an operator of the base station testing system) may interact with the GUI (e.g., via an input component of the base station testing system or an input component of the client device) to allow the one or more processors to obtain the information indicating selection of the other selectable indicator. For example, the user may select the other selectable indicator (e.g., by tapping, clicking, or otherwise engaging the selectable indicator), which causes the base station testing system to obtain the information indicating selection of the other selectable indicator.

In some implementations, the other selectable indicator is associated with configuration settings (e.g., of the base station testing system and/or the base station). In some implementations, the other selectable indicator may have a label (shown as "Settings" in Fig. 2A) that indicates that the other selectable indicator is associated with configuration settings. Accordingly, the other selectable indicator may be associated with a configuration settings module, as further described herein.

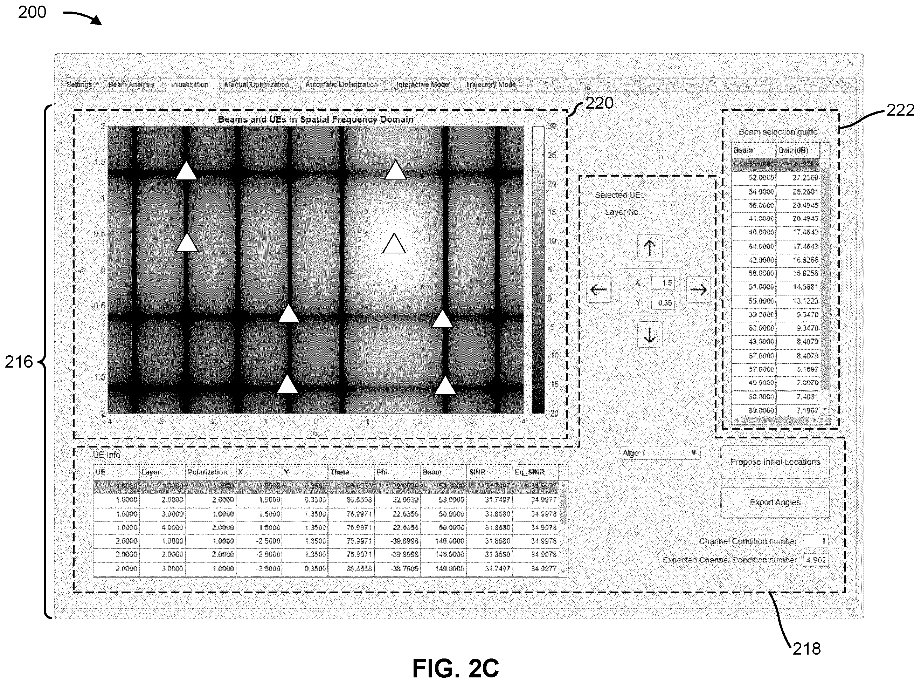

In some implementations, the other selectable indicator is associated with initial locations of the plurality of UEs (e.g., of the base station testing system). In some implementations, the other selectable indicator may have a label (shown as "Initialization" in Fig. 2C) that indicates that the other selectable indicator is associated with initial locations of the plurality of UEs. Accordingly, the other selectable indicator may be associated with a UE initial location module, as further described herein.

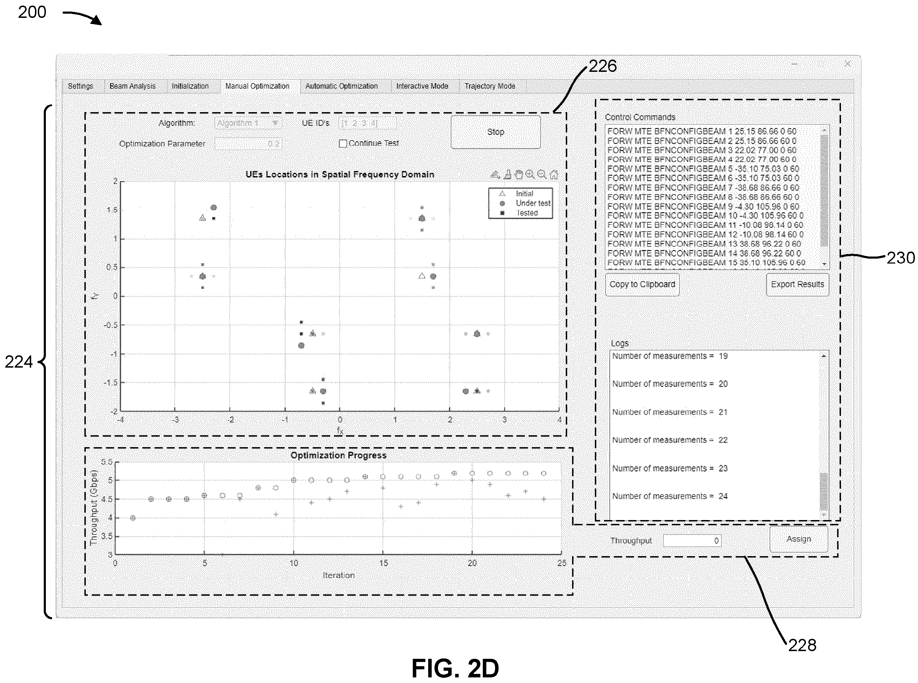

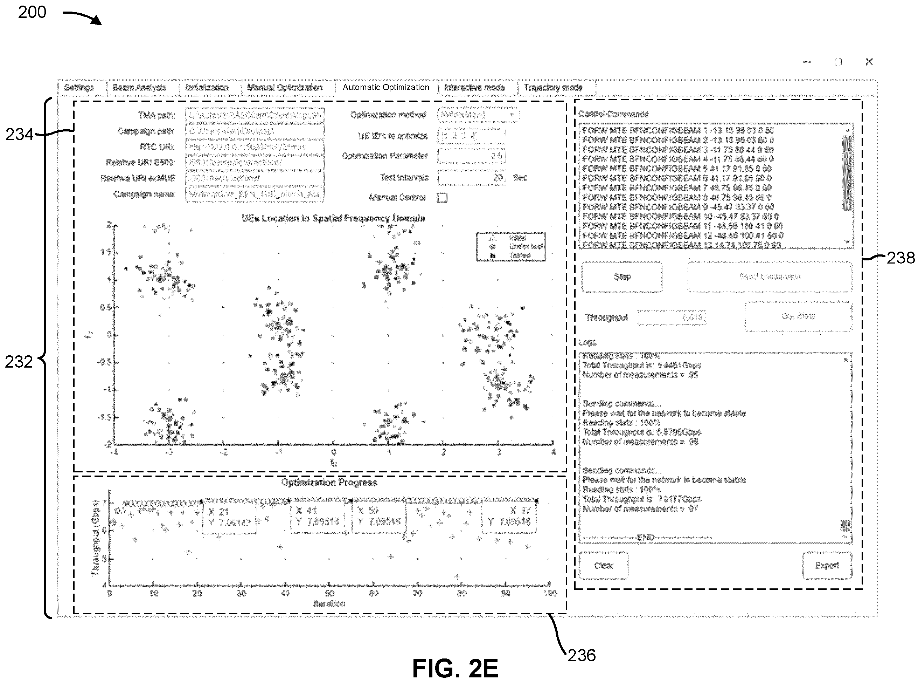

In some implementations, the other selectable indicator is associated with relocation of the plurality of UEs (e.g., of the base station testing system), such as manual relocation of the plurality of UEs or automatic relocation of the plurality of UEs. In some implementations, the other selectable indicator may have a label (shown as "Manual Optimization" in Fig. 2D or as "Automatic Optimization" in Fig. 2E) that indicates that the other selectable indicator is associated with relocation of the plurality of UEs. Accordingly, the other selectable indicator may be associated with a UE relocation module, such as a manual UE relocation module or an automatic UE relocation module, as further described herein.

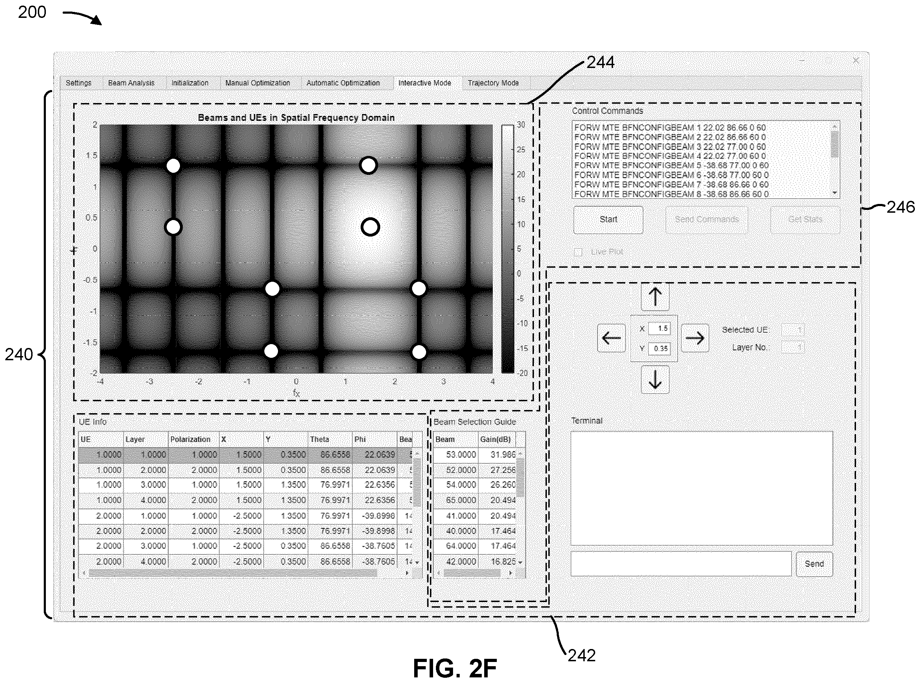

In some implementations, the other selectable indicator is associated with interactions of the plurality of UEs (e.g., of the base station testing system). In some implementations, the other selectable indicator may have a label (shown as "Interactive Mode" in Fig. 2F) that indicates that the other selectable indicator is associated with interaction with the plurality of UEs. Accordingly, the other selectable indicator may be associated with a UE interaction module, as further described herein.

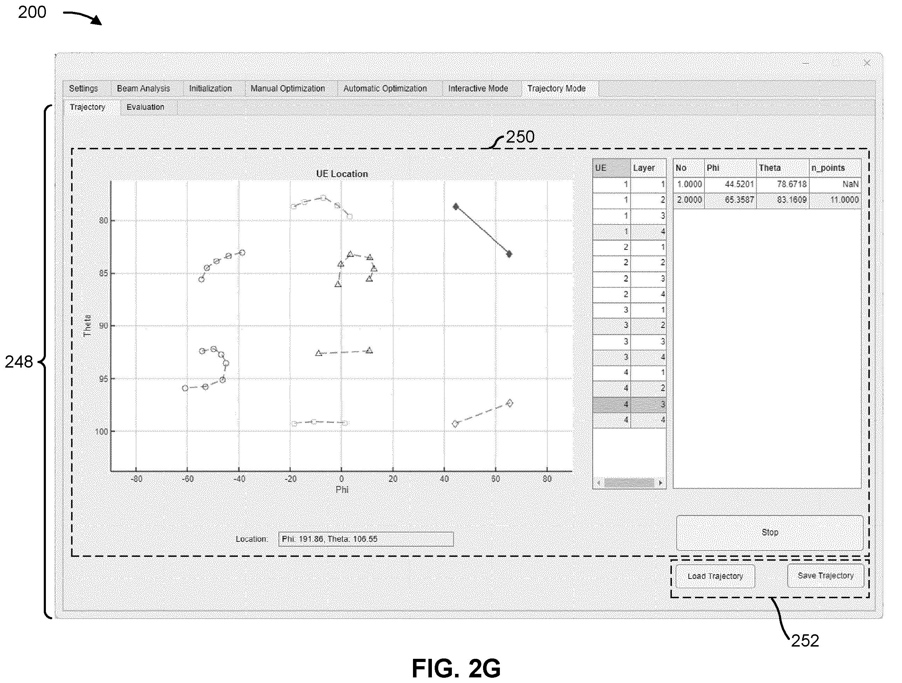

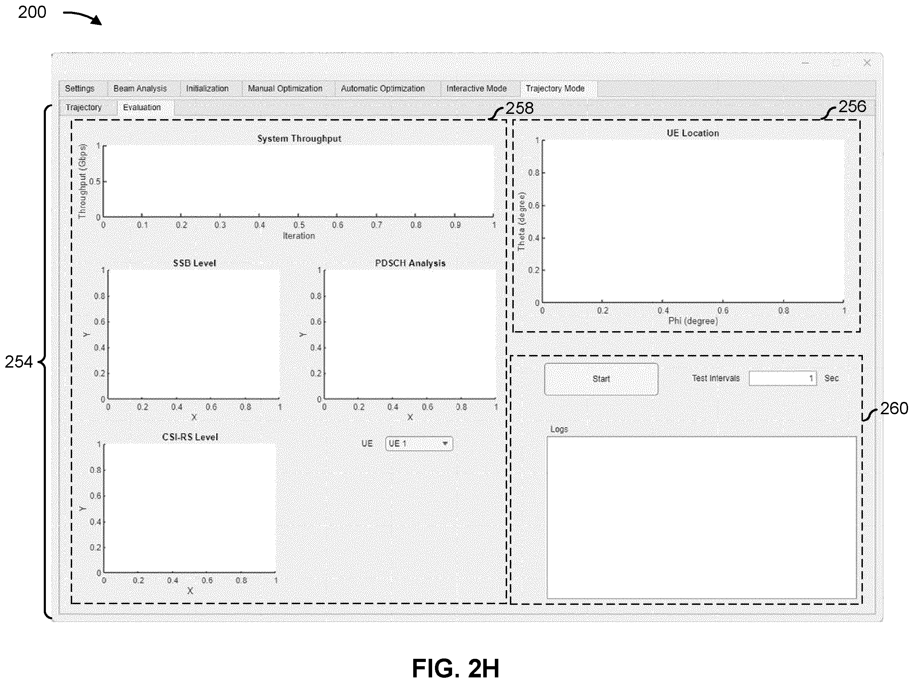

In some implementations, the other selectable indicator is associated with respective trajectories of the plurality of UEs (e.g., of the base station testing system), such as configuration of the respective trajectories of the plurality of UEs or evaluation of the respective trajectories of the plurality of UEs. In some implementations, the other selectable indicator may have a label (shown as "Trajectory Mode - Trajectory" in Fig. 2G or as "Trajectory Mode - Evaluation" in Fig. 2H) that indicates that the other selectable indicator is associated with respective trajectories of the plurality of UEs, such as with configuration of respective trajectories of the plurality of UEs or with evaluation of respective trajectories of the plurality of UEs. Accordingly, the other selectable indicator may be associated with a UE trajectory module, such as a UE trajectory configuration module or a UE trajectory evaluation module, as further described herein.

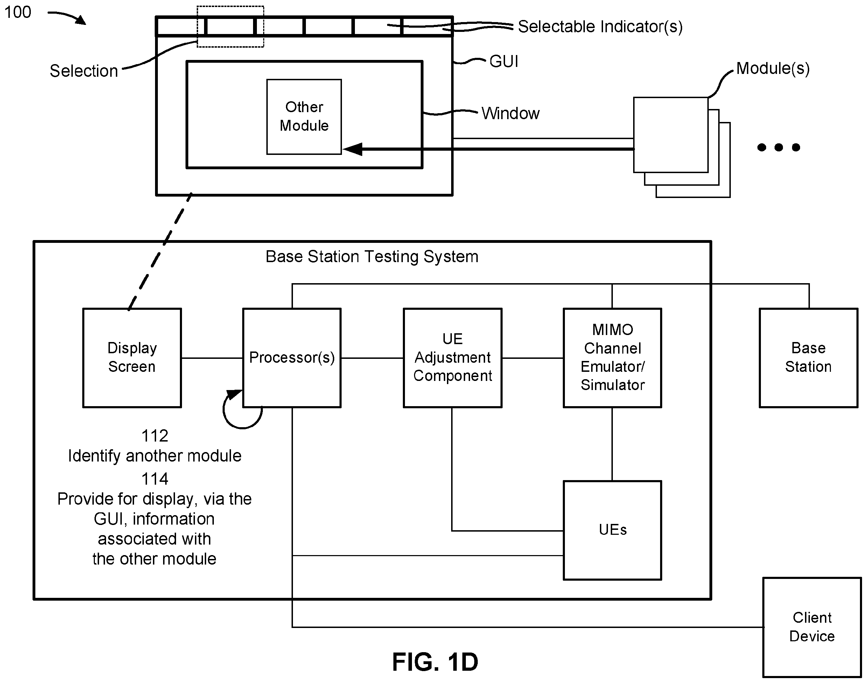

As shown in Fig. 1D, and by reference number 112, the one or more processors may identify the other module (e.g., based on the information indicating selection of the other selectable indicator). For example, the one or more processors may process (e.g., parse and/or read) the information indicating selection of the other selectable indicator to determine that the selectable indicator has been selected and may thereby identify the other module (e.g., because the other module is associated with the other selectable indicator, which may be indicated by the data structure that identifies relationships between selectable indicators and modules).

As examples, the one or more processors may identify, as the other module, a configuration settings module (e.g., when the other selectable indicator is associated with the configuration settings module); a UE initial location module (e.g., when the other selectable indicator is associated with the UE initial location module); a UE relocation location module (e.g., when the other selectable indicator is associated with the UE relocation location module), such as a manual UE relocation location module (e.g., when the other selectable indicator is associated with the UE manual relocation location module) or an automatic UE relocation location module (e.g., when the other selectable indicator is associated with the UE automatic relocation location module); a UE interaction module (e.g., when the other selectable indicator is associated with the UE interaction module); or a UE trajectory module (e.g., when the other selectable indicator is associated with the UE trajectory module), such as a UE trajectory configuration module (e.g., when the other selectable indicator is associated with the UE trajectory configuration module) or a UE trajectory evaluation module (e.g., when the other selectable indicator is associated with the UE trajectory evaluation module).

As shown by reference number 114, the one or more processors may provide for display, via the GUI, information associated with the other module. For example, the one or more processors may provide the information associated with the other module for display in the window of the GUI, such as in a similar manner as that described herein in relation to Fig. 1B and reference number 108. For example, to provide the information associated with the other module for display (e.g., in the window of the GUI), the one or more processors may output the information associated with the other module via the display screen of the base station testing system and/or via the display screen of the client device.

Accordingly, the one or more processors may provide, for display (e.g., in the window of the GUI), information associated with the configuration settings module (e.g., that includes first settings information associated with the base station and/or second settings information associated with the plurality of UEs of the base station testing system) when the other module is the configuration settings module; information associated with the UE initial location module (e.g., that includes the spatial frequency domain beam pattern analysis information and/or initial UE location information associated with the plurality of UEs) when the other module is the UE initial location module; information associated with the UE relocation location module (e.g., the manual UE relocation location module, which includes manual UE relocation information associated with the plurality of UEs and/or performance information associated with the base station, or the automatic UE relocation module, which includes automatic UE relocation information associated with the plurality of UEs and/or the performance information associated with the base station) when the other module is the UE relocation location module (e.g., the manual UE relocation location module or the automatic UE relocation module); information associated with the UE interaction module (e.g., that includes the spatial frequency domain beam pattern analysis information and/or current UE location information associated with the plurality of UEs) when the other module is the UE interaction module; or information associated with the UE trajectory module (e.g., the UE trajectory configuration module, which includes UE trajectory plotting information associated with the plurality of UEs, or the UE trajectory evaluation module, which includes the UE trajectory plotting information associated with the plurality of UEs and/or performance information associated with the base station) when the other module is the UE trajectory module (e.g., the UE trajectory configuration module or the UE trajectory evaluation module). Additional details associated with providing information associated with the other module for display via the GUI are described herein in relation to Figs. 2A-2H.

As indicated above, Figs. 1A-1D are provided as an example. Other examples may differ from what is described with regard to Figs. 1A-1D. The number and arrangement of devices shown in Figs. 1A-1D are provided as an example. In practice, there may be additional devices, fewer devices, different devices, or differently arranged devices than those shown in Figs. 1A-1D. Furthermore, two or more devices shown in Figs. 1A-1D may be implemented within a single device, or a single device shown in Figs. 1A-1D may be implemented as multiple, distributed devices. Additionally, or alternatively, a set of devices (e.g., one or more devices) shown in Figs. 1A-1D may perform one or more functions described as being performed by another set of devices shown in Figs. 1A-1D.

Figs. 2A-2H show example diagrams of a GUI 200 that is provided for display (e.g., on the display screen of the base station testing system and/or on the display screen of the client device, as described herein in relation to Figs. 1A-1D) by the one or more processors of the base station testing system. One or more elements (e.g., selectable indicators, text boxes, buttons, menus, scroll bars, or other elements) of GUI 200 may be configured for interactive use (e.g., by a user of the base station testing system or the client device, such as via an input component of the base station testing system or the client device).

Fig. 2A shows an example of the GUI 200, provided for display, when the one or more processors of the base station testing system obtain information indicating selection of a selectable indicator, shown with the label "Settings," that is associated with configuration settings (e.g., of the base station testing system and/or the base station). Accordingly, as shown in Fig. 2A and by reference number 202, the one or more processors may provide, for display, in the GUI 200 (e.g., in a window of the GUI 200), information associated with a configuration settings module of the GUI 200. As further shown in Fig. 2A, the information associated with the configuration settings module may include first settings information associated with the base station and/or second settings information associated with the plurality of UEs of the base station testing system, shown by reference numbers 204 and 206, respectively. The first settings information may indicate a number of UEs of the plurality of UEs of the base station testing system, a number of layers per UE, and/or other information. The second settings information may indicate antenna settings of the base station (e.g., a number of antennas in an X direction, a number of antennas in a Y direction, an antenna spacing in the X direction, an antenna spacing in the Y direction, and/or a polarization of the antennas, among other examples), phase shifter parameters of the base station (e.g., a phase shifter resolution, an error variance, and/or an error distribution, among other examples), and/or other information. In some implementations, as shown by reference number 208, the information associated with the configuration settings module may include other information, such as information associated with loading, saving, or modifying the first information and/or the second information.

Fig. 2B shows an example of the GUI 200, provided for display, when the one or more processors of the base station testing system obtain information indicating selection of a selectable indicator, shown with the label "Beam Analysis," that is associated with analysis of beam patterns associated with the base station. Accordingly, as shown in Fig. 2B and by reference number 210, the one or more processors may provide, for display, in the GUI 200 (e.g., in a window of the GUI 200), information associated with a beam pattern analysis module of the GUI 200. As further shown in Fig. 2B, and by reference number 212, the information associated with the beam pattern analysis module may include spatial frequency domain beam pattern analysis information associated with the base station (e.g., that indicates how an antenna array of the base station distributes energy across different spatial frequencies, such as per beam, of a plurality of beams, provided by the base station). For example, the spatial frequency domain beam pattern analysis information may be displayed (e.g., using a black-to-white gradient), for a selected beam of the plurality of beams provided by the base station, as a 2D rectilinear (or nearly rectilinear) grid of beam patterns. **In** some implementations, as shown by reference number 214, the information associated with the beam pattern analysis module may include other information, such as information associated with a vertical plane ("V Plane") and/or horizontal plane ("H Plane") of the selected beam of the spatial frequency domain beam pattern analysis information. For example, the other information may be displayed as plots showing distribution of energy of the selected beam in the vertical plane and/or the horizontal plane.

Fig. 2C shows an example of the GUI 200, provided for display, when the one or more processors of the base station testing system obtain information indicating selection of a selectable indicator, shown with the label "Initialization," that is associated with initial locations of the plurality of UEs (e.g., of the base station testing system). Accordingly, as shown in Fig. 2C and by reference number 216, the one or more processors may provide, for display, in the GUI 200 (e.g., in a window of the GUI 200), information associated with a UE initial location module of the GUI 200. As further shown in Fig. 2C, the information associated with the UE initial location module may include the spatial frequency domain beam pattern analysis information (e.g., described herein, such as in relation to Fig. 2B and reference number 212) and/or initial UE location information associated with the plurality of UEs. As shown by reference number 218, the initial UE location information may include information (e.g., that comprises one or more buttons, or other interactable components) for determining respective initial location information of the plurality of UEs (e.g., that indicates an initial location, and other information, for each UE, and for each layer of the UE, of the plurality of UEs), and/or may include the respective initial location information of the plurality of UEs. As shown by reference number 220, the spatial frequency domain beam pattern analysis information may be displayed (e.g., using a black-to-white gradient), for a selected beam of the plurality of beams provided by the base station (e.g., selected using a beam selector component 222 of the GUI 200), as a 2D rectilinear (or nearly rectilinear) grid of beam patterns, and the respective initial location information for the plurality of UEs may displayed as individual triangles on (e.g., overlayed on) the 2D rectilinear grid of beam patterns.

Fig. 2D shows an example of the GUI 200, provided for display, when the one or more processors of the base station testing system obtain information indicating selection of a selectable indicator, shown with the label "Manual Optimization," that is associated with manual relocation of the plurality of UEs (e.g., of the base station testing system). Accordingly, as shown in Fig. 2D and by reference number 224, the one or more processors may provide, for display, in the GUI 200 (e.g., in a window of the GUI 200), information associated with a manual UE relocation module of the GUI 200. As further shown in Fig. 2D, the information associated with the manual UE relocation module may include manual UE relocation information associated with the plurality of UEs and performance information associated with the base station, shown by reference numbers 226 and 228, respectively. The manual UE relocation information may include information that indicates one or more respective manually selected locations of the plurality of UEs (e.g., selected by an operator of the base station testing system and/or the client device, such as to attempt to identify respective optimal locations of the plurality of UEs). Accordingly, as shown in Fig. 2D, the manual UE relocation information may be displayed as circles on a 2D plot (and respective initial locations of the plurality of UEs may be displayed as triangles on the 2D plot). The performance information may indicate, for the base station (e.g., with respect to individual UEs, of the plurality of UEs, and/or with respect to the plurality of UEs, collectively), performance metrics, such as signal quality metrics (e.g., signal-to-interference-and-noise ratio (SINR) metrics, received signal strength indicator (RSSI) metrics, reference signal received power (RSRP) metrics, and/or reference signal received quality (RSRQ) metrics, among other examples), data performance metrics (e.g., throughput metrics, latency metrics, packet loss metrics, bit error rate (BER) metrics, and/or block error rate (BLER) metrics, among other examples), and/or other types of performance metrics. Accordingly, as shown in Fig. 2D, the performance information (e.g. that indicates a throughput metric of the base station) may be displayed for each combination (shown as individual iterations) of manually selected locations of the plurality of UEs. In some implementations, as shown by reference number 230, the information associated with the manual UE relocation module may include other information, such as information associated with logging and/or exporting details associated with the manual UE relocation information and/or the performance information.

Fig. 2E shows an example of the GUI 200, provided for display, when the one or more processors of the base station testing system obtain information indicating selection of a selectable indicator, shown with the label "Automatic Optimization," that is associated with automatic relocation of the plurality of UEs (e.g., of the base station testing system). Accordingly, as shown in Fig. 2E and by reference number 232, the one or more processors may provide, for display, in the GUI 200 (e.g., in a window of the GUI 200), information associated with an automatic UE relocation module of the GUI 200. As further shown in Fig. 2E, the information associated with the automatic UE relocation module may include automatic UE relocation information associated with the plurality of UEs and performance information associated with the base station, shown by reference numbers 234 and 236, respectively. The automatic UE relocation information may include information that indicates one or more respective automatically selected locations of the plurality of UEs (e.g., selected by the one or more processors of the base station testing system, such as by using a closed-loop, iterative technique, to attempt to identify respective optimal locations of the plurality of UEs). Accordingly, as shown in Fig. 2E, the automatic UE relocation information may be displayed as circles on a 2D plot (and respective initial locations of the plurality of UEs may be displayed as triangles on the 2D plot). The performance information may indicate, for the base station (e.g., with respect to individual UEs, of the plurality of UEs, and/or with respect to the plurality of UEs, collectively), performance metrics, such as signal quality metrics (e.g., SINR metrics, RSSI metrics, RSRP metrics, and/or RSRQ metrics, among other examples), data performance metrics (e.g., throughput metrics, latency metrics, packet loss metrics, BER metrics, and/or BLER metrics, among other examples), and/or other types of performance metrics. Accordingly, as shown in Fig. 2E, the performance information (e.g. that indicates a throughput metric of the base station) may be displayed for each combination (shown as individual iterations) of automatically selected locations of the plurality of UEs. In some implementations, as shown by reference number 238, the information associated with the automatic UE relocation module may include other information, such as information associated with logging and/or exporting details associated with the automatic UE relocation information and/or the performance information.

Fig. 2F shows an example of the GUI 200, provided for display, when the one or more processors of the base station testing system obtain information indicating selection of a selectable indicator, shown with the label "Interactive Mode," that is associated with interactions of the plurality of UEs (e.g., of the base station testing system). Accordingly, as shown in Fig. 2F and by reference number 240, the one or more processors may provide, for display, in the GUI 200 (e.g., in a window of the GUI 200), information associated with a UE interaction module of the GUI 200. As further shown in Fig. 2F, the information associated with the UE interaction module may include the spatial frequency domain beam pattern analysis information (e.g., described herein, such as in relation to Fig. 2B and reference number 212) and/or current UE location information associated with the plurality of UEs. As shown by reference number 242, the current UE location information may include information (e.g., that comprises one or more buttons, or other interactable components) for showing and/or updating respective current location information for the plurality of UEs (e.g., that indicates a current location, and other information, for each UE, and for each layer of the UE, of the plurality of UEs) and/or the respective initial location information for the plurality of UEs. As shown by reference number 244, the spatial frequency domain beam pattern analysis information may be displayed (e.g., using a black-to-white gradient), for a selected beam of the plurality of beams provided by the base station (e.g., selected using a beam selector component 246 of the GUI 200), as a 2D rectilinear (or nearly rectilinear) grid of beam patterns, and the respective current location information for the plurality of UEs may be displayed as individual circles on (e.g., overlayed on) the 2D rectilinear grid of beam patterns.

Fig. 2G shows an example of the GUI 200 provided, for display, by the one or more processors of the base station testing system based on the one or more processors obtaining information indicating selection of a selectable indicator, shown with the label "Trajectory Mode - Trajectory," that is associated with configuration of respective trajectories of the plurality of UEs (e.g., of the base station testing system). Accordingly, as shown in Fig. 2G and by reference number 248, the one or more processors may provide, for display, in the GUI 200 (e.g., in a window of the GUI 200), information associated with a UE trajectory configuration module of the GUI 200. As further shown in Fig. 2G, and by reference number 250, the information associated with the UE trajectory configuration module may include UE trajectory plotting information associated with the plurality of UEs. The UE trajectory plotting information associated with the plurality of UEs may indicate one or more respective manually selected trajectory locations of the plurality of UEs (e.g., selected by an operator of the base station testing system and/or the client device to emulate respective movement trajectories of the plurality of UEs). Accordingly, as shown in Fig. 2G, the UE trajectory plotting information may be displayed as different shapes (e.g., circles, squares, diamonds, triangles, or other shapes) on a 2D plot, where a movement trajectory of a UE is displayed as a series of the same shape connected by lines. In some implementations, as shown by reference number 252, the information associated with the UE trajectory configuration module may include other information, such as information associated with loading, logging, and/or exporting details associated with the UE trajectory plotting information.

Fig. 2H shows an example of the GUI, provided for display, when the one or more processors of the base station testing system obtain information indicating selection of a selectable indicator, shown with the label "Trajectory Mode - Evaluation," that is associated with evaluation of respective trajectories of the plurality of UEs (e.g., of the base station testing system). Accordingly, as shown in Fig. 2H and by reference number 254, the one or more processors may provide, for display, in the GUI 200 (e.g., in a window of the GUI 200), information associated with a UE trajectory evaluation module of the GUI 200. As further shown in Fig. 2H, the information associated with the UE trajectory configuration module may include UE trajectory plotting information associated with the plurality of UEs and/or performance information associated with the base station, shown by reference numbers 256 and 258, respectively. The UE trajectory plotting information associated with the plurality of UEs may indicate respective one or more manually selected trajectory locations of the plurality of UEs (e.g., selected by an operator of the base station testing system and/or the client device to emulate respective movement trajectories of the plurality of UEs). Accordingly, as shown in Fig. 2H, the UE trajectory plotting information may be displayed on a 2D plot (e.g., in a similar manner as that described herein in relation to Fig. 2G). The performance information may indicate, for the base station (e.g., with respect to individual UEs, of the plurality of UEs, and/or with respect to the plurality of UEs, collectively), performance metrics, such as signal quality metrics (e.g., SINR metrics, RSSI metrics, RSRP metrics, and/or RSRQ metrics, among other examples), data performance metrics (e.g., throughput metrics, latency metrics, packet loss metrics, BER metrics, and/or BLER metrics, among other examples), and/or other types of performance metrics (e.g., that may include synchronization signal block (SSB) levels, physical downlink shared channel (PDSCH) analysis, and/or channel state information reference signal (CSI-RS) levels). Accordingly, as shown in Fig. 2H, the performance information (e.g. that indicates a throughput metric, an SSB level, PDSCH analysis, and a CSI-RS level of the base station) may be displayed for each UE of the plurality of UEs. In some implementations, as shown by reference number 260, the information associated with the UE trajectory configuration module may include other information, such as information associated with logging and/or exporting details associated with the UE trajectory plotting information and/or the performance information associated with the base station, and/or information associated with starting a trajectory emulation of a particular UE of the plurality of UEs.

As indicated above, Figs. 2A-2H are provided as an example. Other examples may differ from what is described with regard to Figs. 2A-2H.

Fig. 3 is a diagram of an example environment 300 in which systems and/or methods described herein may be implemented. As shown in Fig. 3, environment 300 may include a base station 310, a base station testing system 320, and/or a client device 330. Devices of environment 300 may interconnect via wired connections, wireless connections, or a combination of wired and wireless connections.

Base station 310 includes one or more devices capable of communicating with a UE using a cellular radio access technology (RAT). For example, base station 310 may include a base transceiver station, a radio base station, a node B, an evolved node B (eNodeB), a gNodeB, a base station subsystem, a cellular site, a cellular tower (e.g., a cell phone tower, a mobile phone tower, and/or the like), an access point, a transmit receive point (TRP), a radio access node, a macrocell base station, a microcell base station, a picocell base station, a femtocell base station, or a similar type of device. Base station 310 may transfer traffic between a UE (e.g., using a cellular RAT), other base stations 310 (e.g., using a wireless interface or a backhaul interface, such as a wired backhaul interface). Base station 310 may provide one or more cells that cover geographic areas. Some base stations 310 may be mobile base stations. Some base stations 310 may be capable of communicating using multiple RATs.

In some implementations, base station 310 may perform scheduling and/or resource management for UEs covered by base station 310 (e.g., UEs covered by a cell provided by base station 310). In some implementations, base stations 310 may be controlled or coordinated by a network controller, which may perform load balancing, network-level configuration, and/or the like. The network controller may communicate with base stations 310 via a wireless or wireline backhaul. In some implementations, base station 310 may include a network controller, a self-organizing network (SON) module or component, or a similar module or component. In other words, a base station 310 may perform network control, scheduling, and/or network management functions (e.g., for other base stations 310 and/or for uplink, downlink, and/or sidelink communications of UEs covered by the base station 310). In some implementations, base station 310 may include a central unit and multiple distributed units. The central unit may coordinate access control and communication with regard to the multiple distributed units. The multiple distributed units may provide UEs and/or other base stations 310 with access to a network.

In some implementations, base station 310 may be capable of MU MIMO communication. In a testing scenario, one or more antenna elements (e.g., an antenna array) of base station 310 may be disconnected, and base station 310 may be connected to the base station testing system 320 via one or more antenna ports of base station 310.

Base station testing system 320 includes a plurality of devices, such as a plurality of UEs, capable of communicating with base station 310, such as to perform one or more testing operations associated with base station 310. Base station testing system 320 may include one or more devices capable of receiving, generating, storing, processing, and/or providing information associated with optimizing UE locations (e.g., in the base station testing system 320). For example, base station testing system 320 may include a communication and/or computing device, such as a mobile phone (e.g., a smart phone, a radiotelephone, etc.), a laptop computer, a tablet computer, a handheld computer, a desktop computer, a wearable communication device (e.g., a smart wristwatch, a pair of smart eyeglasses, etc.), or a similar type of device.

The client device 330 may include one or more devices capable of receiving, generating, storing, processing, and/or providing information associated, as described elsewhere herein. The client device 330 may include a communication device and/or a computing device. For example, the client device 330 may include a wireless communication device, a mobile phone, a user equipment, a laptop computer, a tablet computer, a desktop computer, a wearable communication device (e.g., a smart wristwatch, a pair of smart eyeglasses, a head mounted display, or a virtual reality headset), or a similar type of device.

The quantity and arrangement of devices and networks shown in Fig. 3 are provided as one or more examples. In practice, there may be additional devices and/or networks, fewer devices and/or networks, different devices and/or networks, or differently arranged devices and/or networks than those shown in Fig. 3. Furthermore, two or more devices shown in Fig. 3 may be implemented within a single device, or a single device shown in Fig. 3 may be implemented as multiple, distributed devices. Additionally, or alternatively, a set of devices (e.g., one or more devices) of environment 300 may perform one or more functions described as being performed by another set of devices of environment 300.

Fig. 4 is a diagram of example components of a device 400 associated with providing spatial frequency domain beam pattern analysis information associated with a base station via a GUI. The device 400 may correspond to base station 310, base station testing system 320, and/or client device 330. In some implementations, base station 310, base station testing system 320, and/or client device 330 may include one or more devices 400 and/or one or more components of the device 400. As shown in Fig. 4, the device 400 may include a bus 410, a processor 420, a memory 430, an input component 440, an output component 450, and/or a communication component 460.

The bus 410 may include one or more components that enable wired and/or wireless communication among the components of the device 400. The bus 410 may couple together two or more components of Fig. 4, such as via operative coupling, communicative coupling, electronic coupling, and/or electric coupling. For example, the bus 410 may include an electrical connection (e.g., a wire, a trace, and/or a lead) and/or a wireless bus. The processor 420 may include a central processing unit, a graphics processing unit, a microprocessor, a controller, a microcontroller, a digital signal processor, a field-programmable gate array, an application-specific integrated circuit, and/or another type of processing component. The processor 420 may be implemented in hardware, firmware, or a combination of hardware and software. In some implementations, the processor 420 may include one or more processors capable of being programmed to perform one or more operations or processes described elsewhere herein.

The memory 430 may include volatile and/or nonvolatile memory. For example, the memory 430 may include random access memory (RAM), read only memory (ROM), a hard disk drive, and/or another type of memory (e.g., a flash memory, a magnetic memory, and/or an optical memory). The memory 430 may include internal memory (e.g., RAM, ROM, or a hard disk drive) and/or removable memory (e.g., removable via a universal serial bus connection). The memory 430 may be a non-transitory computer-readable medium. The memory 430 may store information, one or more instructions, and/or software (e.g., one or more software applications) related to the operation of the device 400. In some implementations, the memory 430 may include one or more memories that are coupled (e.g., communicatively coupled) to one or more processors (e.g., processor 420), such as via the bus 410. Communicative coupling between a processor 420 and a memory 430 may enable the processor 420 to read and/or process information stored in the memory 430 and/or to store information in the memory 430.

The input component 440 may enable the device 400 to receive input, such as user input and/or sensed input. For example, the input component 440 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 450 may enable the device 400 to provide output, such as via a display, a speaker, and/or a light-emitting diode. The communication component 460 may enable the device 400 to communicate with other devices via a wired connection and/or a wireless connection. For example, the communication component 460 may include a receiver, a transmitter, a transceiver, a modem, a network interface card, and/or an antenna.

The device 400 may perform one or more operations or processes described herein. For example, a non-transitory computer-readable medium (e.g., memory 430) may store a set of instructions (e.g., one or more instructions or code) for execution by the processor 420. The processor 420 may execute the set of instructions to perform one or more operations or processes described herein. In some implementations, execution of the set of instructions, by one or more processors 420, causes the one or more processors 420 and/or the device 400 to perform one or more operations or processes described herein. In some implementations, hardwired circuitry may be used instead of or in combination with the instructions to perform one or more operations or processes described herein. Additionally, or alternatively, the processor 420 may be configured to perform one or more operations or processes described herein. Thus, implementations described herein are not limited to any specific combination of hardware circuitry and software.

The number and arrangement of components shown in Fig. 4 are provided as an example. The device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

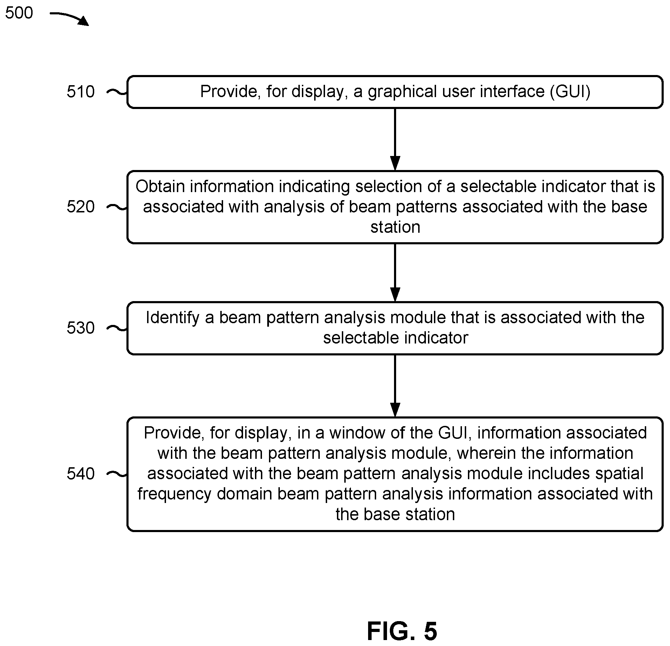

Fig. 5 is a flowchart of an example process 500 associated with providing spatial frequency domain beam pattern analysis information associated with a base station via a GUI. In some implementations, one or more process blocks of Fig. 5 are performed by the base station testing system and/or one or more components of the base station testing system, such as one or more processors of the base station testing system, a display screen of the base station testing system, a UE adjustment component of the base station testing system, a MIMO channel emulator/simulator of the base station testing system, and/or a plurality of UEs of the base station testing system. In some implementations, one or more process blocks of Fig. 5 are performed by another device or a group of devices separate from or including the base station testing system, such as a base station (e.g., base station 310) or a client device (e.g., client device 330). Additionally, or alternatively, one or more process blocks of Fig. 5 may be performed by one or more components of device 400, such as processor 420, memory 430, input component 440, output component 450, and/or communication component 460.

As shown in Fig. 5, process 500 may include providing, for display, a GUI (block 510). For example, the base station testing system may provide, for display, a GUI, as described above. In some implementations, the GUI is associated with facilitating testing of a base station by the base station testing system, and the GUI includes one or more selectable indicators respectively associated with one or more modules of the GUI.

As further shown in Fig. 5, process 500 may include obtaining information indicating selection of a selectable indicator that is associated with analysis of beam patterns associated with the base station (block 520). For example, the base station testing system may obtain, based on providing the GUI, information indicating selection of a selectable indicator, of the one or more selectable indicators, that is associated with analysis of beam patterns associated with the base station, as described above.

As further shown in Fig. 5, process 500 may include identifying a beam pattern analysis module that is associated with the selectable indicator (block 530). For example, the base station testing system may identify, based on the information indicating selection of the selectable indicator, a beam pattern analysis module, of the one or more modules, that is associated with the selectable indicator, as described above.

As further shown in Fig. 5, process 500 may include providing, for display, in a window of the GUI, information associated with the beam pattern analysis module, wherein the information associated with the beam pattern analysis module includes spatial frequency domain beam pattern analysis information associated with the base station (block 540). For example, the base station testing system may provide, for display, in a window of the GUI, information associated with the beam pattern analysis module, wherein the information associated with the beam pattern analysis module includes spatial frequency domain beam pattern analysis information associated with the base station, as described above.

Process 500 may include additional implementations, such as any single implementation or any combination of implementations described below and/or in connection with one or more other processes described elsewhere herein.

In a first implementation, process 500 includes obtaining, based on providing the GUI, information indicating selection of another selectable indicator, of the one or more selectable indicators, that is associated with configuration settings; identifying, based on the information indicating selection of the other selectable indicator, a configuration settings module, of the one or more modules, that is associated with the other selectable indicator; and providing, for display, in another window of the GUI, information associated with the configuration settings module, wherein the information associated with the configuration settings module includes first settings information associated with the base station and second settings information associated with the plurality of UEs.

In a second implementation, alone or in combination with the first implementation, process 500 includes obtaining, based on providing the GUI, information indicating selection of another selectable indicator, of the one or more selectable indicators, that is associated with initial locations of the plurality of UEs; identifying, based on the information indicating selection of the other selectable indicator, a UE initial location module, of the one or more modules, that is associated with the other selectable indicator; and providing, for display, in another window of the GUI, information associated with the UE initial location module, wherein the information associated with the UE initial location module includes the spatial frequency domain beam pattern analysis information and initial UE location information associated with the plurality of UEs.

In a third implementation, alone or in combination with one or more of the first and second implementations, process 500 includes obtaining, based on providing the GUI, information indicating selection of another selectable indicator, of the one or more selectable indicators, that is associated with manual relocation of the plurality of UEs; identifying, based on the information indicating selection of the other selectable indicator, a manual UE relocation module, of the one or more modules, that is associated with the other selectable indicator; and providing, for display, in another window of the GUI, information associated with the manual UE relocation module, wherein the information associated with the manual UE relocation module includes manual UE relocation information associated with the plurality of UEs and performance information associated with the base station.

In a fourth implementation, alone or in combination with one or more of the first through third implementations, process 500 includes obtaining, based on providing the GUI, information indicating selection of another selectable indicator, of the one or more selectable indicators, that is associated with automatic relocation of the plurality of UEs; identifying, based on the information indicating selection of the other selectable indicator, an automatic UE relocation module, of the one or more modules, that is associated with the other selectable indicator; and providing, for display, in another window of the GUI, information associated with the automatic UE relocation module, wherein the information associated with the automatic UE relocation module includes automatic UE relocation information associated with the plurality of UEs and performance information associated with the base station.

In a fifth implementation, alone or in combination with one or more of the first through fourth implementations, process 500 includes obtaining, based on providing the GUI, information indicating selection of another selectable indicator, of the one or more selectable indicators, that is associated with configuration of respective trajectories of the plurality of UEs; identifying, based on the information indicating selection of the other selectable indicator, a UE trajectory configuration module, of the one or more modules, that is associated with the other selectable indicator; and providing, for display, in another window of the GUI, information associated with the UE trajectory configuration module, wherein the information associated with the UE trajectory configuration module includes UE trajectory plotting information associated with the plurality of UEs.

In a sixth implementation, alone or in combination with one or more of the first through fifth implementations, process 500 includes obtaining, based on providing the GUI, information indicating selection of another selectable indicator, of the one or more selectable indicators, that is associated with evaluation of respective trajectories of the plurality of UEs; identifying, based on the information indicating selection of the other selectable indicator, a UE trajectory evaluation module, of the one or more modules, that is associated with the other selectable indicator; and providing, for display, in another window of the GUI, information associated with the UE trajectory evaluation module, wherein the information associated with the UE trajectory evaluation module includes UE trajectory plotting information associated with the plurality of UEs and performance information associated with the base station.

In a seventh implementation, alone or in combination with one or more of the first through sixth implementations, the base station testing system includes a display screen, providing the GUI includes outputting the GUI via the display screen, and providing, in the window of the GUI, the information associated with the beam pattern analysis module includes outputting the information associated with the beam pattern analysis module in the window of the GUI via the display screen.

In an eighth implementation, alone or in combination with one or more of the first through seventh implementations, providing the GUI includes transmitting the GUI to a client device to cause the client device to output the GUI via a display screen of the client device, and providing, in the window of the GUI, the information associated with the beam pattern analysis module includes transmitting the information associated with the beam pattern analysis module to the client device to cause the client device to output the information associated with the beam pattern analysis module, in the window of the GUI, via the display screen of the client device.

Although Fig. 5 shows example blocks of process 500, in some implementations, process 500 includes additional blocks, fewer blocks, different blocks, or differently arranged blocks than those depicted in Fig. 5. Additionally, or alternatively, two or more of the blocks of process 500 may be performed in parallel.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and

EP 4 708 735 A1

one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

**Claims**

1.  A base station testing system, comprising:

    a plurality of user equipments, UEs; and
    one or more processors configured to:

       provide, for display, a graphical user interface, GUI, associated with facilitating testing of a base station by the base station testing system,
       wherein the GUI includes one or more selectable indicators respectively associated with one or more modules of the GUI;
       obtain, based on providing the GUI, information indicating selection of a selectable indicator, of the one or more selectable indicators, that is associated with analysis of beam patterns associated with the base station;
       identify, based on the information indicating selection of the selectable indicator, a beam pattern analysis module, of the one or more modules, that is associated with the selectable indicator; and
       provide, for display, in a window of the GUI, information associated with the beam pattern analysis module, wherein the information associated with the beam pattern analysis module includes spatial frequency domain beam pattern analysis information associated with the base station.

2.  The base station testing system of claim 1, wherein the one or more processors are further configured to:

       obtain, based on providing the GUI, information indicating selection of another selectable indicator, of the one or more selectable indicators, that is associated with configuration settings;
       identify, based on the information indicating selection of the other selectable indicator, a configuration settings module, of the one or more modules, that is associated with the other selectable indicator; and
       provide, for display, in another window of the GUI, information associated with the configuration settings module, wherein the information associated with the configuration settings module includes first settings information associated with the base station and second settings information associated with the plurality of UEs.

3.  The base station testing system of claim 1 or claim 2, wherein the one or more processors are further configured to:

       obtain, based on providing the GUI, information indicating selection of another selectable indicator, of the one or more selectable indicators, that is associated with initial locations of the plurality of UEs;
       identify, based on the information indicating selection of the other selectable indicator, a UE initial location module, of the one or more modules, that is associated with the other selectable indicator; and
       provide, for display, in another window of the GUI, information associated with the UE initial location module, wherein the information associated with the UE initial location module includes the spatial frequency domain beam pattern analysis information and initial UE location information associated with the plurality of UEs.

4.  The base station testing system of any preceding claim, wherein the one or more processors are further configured to:

       obtain, based on providing the GUI, information indicating selection of another selectable indicator, of the one or more selectable indicators, that is associated with manual relocation of the plurality of UEs;
       identify, based on the information indicating selection of the other selectable indicator, a manual UE relocation module, of the one or more modules, that is associated with the other selectable indicator; and

provide, for display, in another window of the GUI, information associated with the manual UE relocation module, wherein the information associated with the manual UE relocation module includes manual UE relocation information associated with the plurality of UEs and performance information associated with the base station.

5. The base station testing system of any preceding claim, wherein the one or more processors are further configured to:

obtain, based on providing the GUI, information indicating selection of another selectable indicator, of the one or more selectable indicators, that is associated with automatic relocation of the plurality of UEs;

identify, based on the information indicating selection of the other selectable indicator, an automatic UE relocation module, of the one or more modules, that is associated with the other selectable indicator; and

provide, for display, in another window of the GUI, information associated with the automatic UE relocation module,

wherein the information associated with the automatic UE relocation module includes automatic UE relocation information associated with the plurality of UEs and performance information associated with the base station.

6. The base station testing system of any preceding claim, wherein the one or more processors are further configured to:

obtain, based on providing the GUI, information indicating selection of another selectable indicator, of the one or more selectable indicators, that is associated with configuration of respective trajectories of the plurality of UEs;

identify, based on the information indicating selection of the other selectable indicator, a UE trajectory configuration module, of the one or more modules, that is associated with the other selectable indicator; and

provide, for display, in another window of the GUI, information associated with the UE trajectory configuration module,

wherein the information associated with the UE trajectory configuration module includes UE trajectory plotting information associated with the plurality of UEs.

7. The base station testing system of any preceding claim, wherein the one or more processors are further configured to:

obtain, based on providing the GUI, information indicating selection of another selectable indicator, of the one or more selectable indicators, that is associated with evaluation of respective trajectories of the plurality of UEs;

identify, based on the information indicating selection of the other selectable indicator, a UE trajectory evaluation module, of the one or more modules, that is associated with the other selectable indicator; and

provide, for display, in another window of the GUI, information associated with the UE trajectory evaluation module,

wherein the information associated with the UE trajectory evaluation module includes UE trajectory plotting information associated with the plurality of UEs and performance information associated with the base station.

8. The base station testing system of any preceding claim, further comprising a display screen, wherein:

the one or more processors, to provide the GUI, are configured to output the GUI via the display screen; and

the one or more processors, to provide, in the window of the GUI, the information associated with the beam pattern analysis module, are configured to output the information associated with the beam pattern analysis module in the window of the GUI via the display screen,

and/or wherein:

the one or more processors, to provide the GUI, are configured to transmit the GUI to a client device to cause the client device to output the GUI via a display screen of the client device; and

the one or more processors, to provide, in the window of the GUI, the information associated with the beam pattern analysis module, are configured to transmit the information associated with the beam pattern analysis module to the client device to cause the client device to output the information associated with the beam pattern analysis module, in the window of the GUI, via the display screen of the client device.

9. A base station testing system, comprising:
one or more processors configured to:

obtain, based on providing a graphical user interface, GUI, associated with facilitating testing of a base station by the base station testing system, information indicating selection of a selectable indicator, of one or more selectable indicators of the GUI, that is associated with analysis of beam patterns associated with the base station; and

provide, for display, in a window of the GUI, information associated with a beam pattern analysis module, of one or more modules of the GUI, that is associated with the selectable indicator,

wherein the information associated with the beam pattern analysis module includes spatial frequency domain beam pattern analysis information associated with the base station.

10. The base station testing system of claim 9, wherein the one or more processors are further configured to:

obtain information indicating selection of another selectable indicator, of the one or more selectable indicators, that is associated with configuration settings; and

provide, for display, in another window of the GUI, a configuration settings module, of the one or more modules, that is associated with the other selectable indicator,

wherein the information associated with the configuration settings module includes first settings information associated with the base station and second settings information associated with a plurality of user equipments, UEs, of the base station testing system.

11. The base station testing system of claim 9 or claim 10, wherein the one or more processors are further configured to:

obtain information indicating selection of another selectable indicator, of the one or more selectable indicators, that is associated with initial locations of a plurality of user equipments, UEs, of the base station testing system; and

provide, for display, in another window of the GUI, information associated with a UE initial location module, of the one or more modules, that is associated with the other selectable indicator,

wherein the information associated with the UE initial location module includes the spatial frequency domain beam pattern analysis information and initial UE location information associated with the plurality of UEs.

12. The base station testing system of any of claims 9 to 11, wherein the one or more processors are further configured to:

obtain information indicating selection of another selectable indicator, of the one or more selectable indicators, that is associated with manual relocation of a plurality of user equipments, UEs, of the base station testing system; and

provide, for display, in another window of the GUI, information associated with a manual UE relocation module, of the one or more modules, that is associated with the other selectable indicator,

wherein the information associated with the manual UE relocation module includes manual UE relocation information associated with the plurality of UEs and performance information associated with the base station.

13. The base station testing system of any of claims 9 to 12, wherein the one or more processors are further configured to:

obtain, based on providing the GUI, information indicating selection of another selectable indicator, of the one or more selectable indicators, that is associated with automatic relocation of a plurality of user equipments, UEs, of the base station testing system; and

provide, for display, in another window of the GUI, information associated with an automatic UE relocation module, of the one or more modules, that is associated with the other selectable indicator,

wherein the information associated with the automatic UE relocation module includes automatic UE relocation information associated with the plurality of UEs and performance information associated with the base station.

14. The base station testing system of any of claims 9 to 13, wherein:
the one or more processors are further configured to:

obtain information indicating selection of another selectable indicator, of the one or more selectable indicators, that is associated with configuration of respective trajectories of a plurality of user equipments, UEs, of the base station testing system; and

provide, for display, in another window of the GUI, information associated with a UE trajectory configuration module, of the one or more modules, that is associated with the other selectable indicator,

wherein the information associated with the UE trajectory configuration module includes UE trajectory plotting information

associated with the plurality of UEs,

and/or wherein:
the one or more processors are further configured to:

obtain information indicating selection of another selectable indicator, of the one or more selectable indicators, that is associated with evaluation of respective trajectories of a plurality of user equipments, UEs, of the base station testing system; and
provide, for display, in another window of the GUI, information associated with a UE trajectory evaluation module, of the one or more modules, that is associated with the other selectable indicator,
wherein the information associated with the UE trajectory evaluation module includes UE trajectory plotting information associated with the plurality of UEs and performance information associated with the base station.

15. A method, comprising:

providing, by a base station testing system, for display, a graphical user interface, GUI, associated with facilitating testing of a base station by the base station testing system;
obtaining, by the base station testing system and based on providing the GUI, information indicating selection of a selectable indicator, of one or more selectable indicators of the GUI, that is associated with analysis of beam patterns associated with the base station; and
providing, by the base station testing system, for display, in a window of the GUI, information associated with a beam pattern analysis module, of the one or more modules, that is associated with the selectable indicator,
wherein the information associated with the beam pattern analysis module includes spatial frequency domain beam pattern analysis information associated with the base station.

16. The method of claim 15, further comprising:

obtaining information indicating selection of another selectable indicator, of the one or more selectable indicators, that is associated with initial locations of a plurality of user equipments, UEs, of the base station testing system; and
providing, for display, in another window of the GUI, information associated with a UE initial location module, of the one or more modules, that is associated with the other selectable indicator,
wherein the information associated with the UE initial location module includes the spatial frequency domain beam pattern analysis information and
initial UE location information associated with the plurality of UEs, and/or further comprising:

obtaining, based on providing the GUI, information indicating selection of another selectable indicator, of the one or more selectable indicators, that is associated with relocation of a plurality of user equipments, UEs, of the base station testing system; and
providing, for display, in another window of the GUI, information associated with a UE relocation module, of the one or more modules, that is associated with the other selectable indicator,
wherein the information associated with the UE relocation module includes UE relocation information associated with the plurality of UEs and
performance information associated with the base station,

and/or further comprising:

obtaining information indicating selection of another selectable indicator, of the one or more selectable indicators, that is associated with respective trajectories a plurality of user equipments, UEs, of the base station testing system; and
providing, for display, in another window of the GUI, information associated with a UE trajectory module, of the one or more modules, that is associated with the other selectable indicator,
wherein the information associated with the UE trajectory module includes UE trajectory plotting information associated with the plurality of UEs.

FIG. 1A

EP 4 708 735 A1

100

Selection

Selectable Indicator(s)

GUI

Module(s)

Beam Pattern Analysis Module

Window

• • •

**Base Station Testing System**

Display Screen

Processor(s)

UE Adjustment Component

MIMO Channel Emulator/ Simulator

Base Station

UEs

Client Device

106
Identify a beam pattern analysis module

108
Provide for display, via the GUI, information associated with the beam pattern analysis module

**FIG. 1B**

EP 4 708 735 A1

**FIG. 1C**

**FIG. 1D**

EP 4 708 735 A1

FIG. 2A

EP 4 708 735 A1

**FIG. 2B**

FIG. 2C

**FIG. 2D**

FIG. 2E

200

244

Settings | Beam Analysis | Initialization | Manual Optimization | Automatic Optimization | Interactive Mode | Trajectory Mode

**Beams and UEs in Spatial Frequency Domain**

Control Commands

FORW MTE BFNCONFIGBEAM 1 22.02 86.66 0 60
FORW MTE BFNCONFIGBEAM 2 22.02 86.66 60 0
FORW MTE BFNCONFIGBEAM 3 22.02 77.00 0 60
FORW MTE BFNCONFIGBEAM 4 22.02 77.00 60 0
FORW MTE BFNCONFIGBEAM 5 -38.68 77.00 0 60
FORW MTE BFNCONFIGBEAM 6 -38.68 77.00 60 0
FORW MTE BFNCONFIGBEAM 7 -38.68 86.66 0 60
FORW MTE BFNCONFIGBEAM 8 -38.68 86.66 60 0

Start | Send Commands | Get Stats

Live Plot

246

240

Selected UE: 1
Layer No.: 1

X 1.5
Y 0.35

UE Info

| UE | Layer | Polarization | X | Y | Theta | Phi | Bea |
|---|---|---|---|---|---|---|---|
| 1.0000 | 1.0000 | 1.0000 | 1.5000 | 0.3500 | 86.6558 | 22.0639 | 5 |
| 1.0000 | 2.0000 | 2.0000 | 1.5000 | 0.3500 | 86.6558 | 22.0639 | 5 |
| 1.0000 | 3.0000 | 1.0000 | 1.5000 | 1.3500 | 76.9971 | 22.6356 | 5 |
| 1.0000 | 4.0000 | 2.0000 | 1.5000 | 1.3500 | 76.9971 | 22.6356 | 5 |
| 2.0000 | 1.0000 | 1.0000 | -2.5000 | 1.3500 | 76.9971 | -39.8998 | 14 |
| 2.0000 | 2.0000 | 2.0000 | -2.5000 | 1.3500 | 76.9971 | -39.8998 | 14 |
| 2.0000 | 3.0000 | 1.0000 | -2.5000 | 0.3500 | 86.6558 | -38.7605 | 14 |
| 2.0000 | 4.0000 | 2.0000 | -2.5000 | 0.3500 | 86.6558 | -38.7605 | 14 |

Beam Selection Guide

| Beam | Gain(dB) |
|---|---|
| 53.0000 | 31.986 |
| 52.0000 | 27.256 |
| 54.0000 | 26.260 |
| 65.0000 | 20.494 |
| 41.0000 | 20.494 |
| 40.0000 | 17.464 |
| 64.0000 | 17.464 |
| 42.0000 | 16.825 |

Terminal

Send

242

**FIG. 2F**

30

FIG. 2G

**FIG. 2H**

300

Base Station
310

Base Station
Testing
System
320

Client
Device
330

FIG. 3

400

Bus
410

Processor
420

Memory
430

Input
Component
440

Output
Component
450

Communication
Component
460

**FIG. 4**

500

| 510 | Provide, for display, a graphical user interface (GUI) |
|---|---|

↓

| 520 | Obtain information indicating selection of a selectable indicator that is associated with analysis of beam patterns associated with the base station |
|---|---|

↓

| 530 | Identify a beam pattern analysis module that is associated with the selectable indicator |
|---|---|

↓

| 540 | Provide, for display, in a window of the GUI, information associated with the beam pattern analysis module, wherein the information associated with the beam pattern analysis module includes spatial frequency domain beam pattern analysis information associated with the base station |
|---|---|

**FIG. 5**

Europäisches
Patentamt

European
Patent Office

Office européen
des brevets

# EUROPEAN SEARCH REPORT

**Application Number**

EP 25 19 8808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 337 089 B2 (ERICSSON TELEFON AB L M [SE]) 17 May 2022 (2022-05-17) <br> * column 1 * <br> * column 15 * <br> * column 20 * <br> * figures 1-9 * <br> * claims 1-13 * <br> ----- | 1-16 | INV. <br> H04B17/23 <br> H04B17/20 |
| X | US 11 569 893 B1 (KOTAGIRI DHEERAJ [JP] ET AL) 31 January 2023 (2023-01-31) <br> * claims 1-13 * <br> * column 8 - column 9 * <br> ----- | 1-16 | |
| A | US 2024/205693 A1 (HUANG WEI-CHIA [TW] ET AL) 20 June 2024 (2024-06-20) <br> * paragraph [0018] * <br> * paragraph [0045] - paragraph [0047] * <br> * claims 1-20 * <br> ----- | 1,9,15 | |
| | | | **TECHNICAL FIELDS SEARCHED (IPC)** <br><br> H04B |

The present search report has been drawn up for all claims

| Place of search | Date of completion of the search | Examiner |
|---|---|---|
| The Hague | 28 January 2026 | Reville, Lenora |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................
& : member of the same patent family, corresponding
   document

EPO FORM 1503 03.82 (P4C01)

## ANNEX TO THE EUROPEAN SEARCH REPORT
## ON EUROPEAN PATENT APPLICATION NO.

EP 25 19 8808

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2026

| Patent document cited in search report | | Publication date | Patent family member(s) | | Publication date |
|---|---|---|---|---|---|
| US 11337089 | B2 | 17-05-2022 | EP | 3701647 A1 | 02-09-2020 |
| | | | US | 2019132754 A1 | 02-05-2019 |
| | | | WO | 2019081025 A1 | 02-05-2019 |
| US 11569893 | B1 | 31-01-2023 | JP | 2023085217 A | 20-06-2023 |
| | | | US | 11569893 B1 | 31-01-2023 |
| US 2024205693 | A1 | 20-06-2024 | US | 2023171614 A1 | 01-06-2023 |
| | | | US | 2024205693 A1 | 20-06-2024 |